# EUROPEAN PATENT APPLICATION

(11) **EP 3 928 918 A1**
(43) Date of publication of application: **29.12.2021**
(21) Application number: 20795006.4
(22) Date of filing: 06.04.2020
(51) Int. Cl.: B23K 35/30, B23K 35/368

(54) **NI-BASED ALLOY FLUX-CORED WIRE**

(30) Priority: 22.04.2019 JP 2019081053
(71) Applicant: KABUSHIKI KAISHA KOBE SEIKO SHO (KOBE STEEL, LTD.), Hyogo 651-8585 (JP)
(72) Inventor: KITAGAWA, Yoshihiko, Kanagawa 251-8551 (JP); FUKUDA, Kazuhiro, Hyogo 651-8585 (JP)
(74) Representative: Müller-Boré & Partner Patentanwälte PartG mbB
(86) International application number: PCT/JP2020/015588
(87) International publication number: WO 2020/217963

(57) **Abstract**

The Ni-based alloy flux-cored wire comprises an Ni-based alloy outer sheath, and a flux filled in the interior of the Ni-based alloy outer sheath. The Ni-based alloy flux-cored wire contains, per wire total mass, 45 to 75% by mass Ni, 20% by mass or less Cr, 10 to 20% by mass Mo, 10.0% by mass or less Fe, 3 to 11% by mass TiO₂, 0.01 to 2.0% by mass Ca, 1.0% by mass or less (including 0% by mass) F, and less than 0.5% by mass (including 0% by mass) Nb.

## Description

### Technical Field

The present invention relates to a Ni-based alloy flux cored wire.

### Background Art

Various alloys with a high content of Ni, such as a steel containing 5% to 9% of Ni representative as a low temperature service steel, are widely used, e.g., in a storage tank of LNG, liquid nitrogen, liquid oxygen, and the like.

In welding of such alloys with a high content of Ni, in order that a welding joint portion has the low temperature toughness equivalent to that of a base metal, it is common to use a Ni-based alloy welding wire instead of a homogeneous welding wire which has a similar component to the base metal having a ferritic microstructure.

In recent years, even in the welding of alloys with a high content of Ni, gas shielded arc welding using a Ni-based alloy flux cored wire by which higher working efficiency can be expected is expanding compared to shielded metal arc welding and TIG welding, and various studies have been made for the purpose of improving welding quality, weldability, and the like.

For example, Patent Literature 1 discloses a Ni-based alloy flux cored wire in which contents of components in the wire are limited to a specific range for the purpose of providing the Ni-based alloy flux cored wire giving the excellent weldability in all positions, good pitting resistance and bead appearance, and deposited metal having good hot cracking resistance.

### Citation List

### Patent Literature

Patent Literature 1: JP 2011-140064 A
Patent Literature 2: Japanese Patent No. 5968855

### Summary of Invention

### Technical Problem

Here, in the welding using the Ni-based alloy flux cored wire, there is a problem that porosity due to gas generated in molten metal is liable to occur.

In response to such a problem, in Patent Literature 2, contents of components in the wire are limited to a specific range for improving the porosity resistance in a Ni-based alloy flux cored wire.

However, in Patent Literature 2, an attempt to improve the porosity resistance in vertical butt welding is made, but there is room for improvement in horizontal welding where prevention of the porosity is particularly difficult.

The present invention has been made in view of the above, and an object thereof is to provide a Ni-based alloy flux cored wire giving excellent weldability, and excellent porosity resistance even when horizontal welding is performed.

### Solution to Problem

As a result of intensive studies on the horizontal welding using the Ni-based alloy flux cored wire, the present inventors have found that bubbles generated in molten metal during horizontal welding move upward in the molten metal and reach an interface between the molten metal and molten slag, and then move in the molten slag and are discharged to the outside. Then, when the slag is rapidly solidified, the bubbles reaching the interface between the molten metal and the slag are prevented from discharging to the outside, and thus porosity occurs. The present inventors have found that, in order to improve the porosity resistance, it is effective to increase time until the slag solidification by lowering a melting point of the slag, and in order to achieve this, it is effective to contain Ca in the wire, and the present invention has been completed.

That is, the Ni-based alloy flux cored wire in an aspect of the present invention includes a Ni-based alloy outer sheath and a flux with which the Ni-based alloy outer sheath is filled, and includes, per a total mass of the wire: Ni: 45 mass% to 75 mass%; Cr: 20 mass% or less; Mo: 10 mass% to 20 mass%; Fe: 10.0 mass% or less; TiO₂: 3 mass% to 11 mass%; Ca: 0.01 mass% to 2.0 mass%; F: 1.0 mass% or less (including 0 mass%); and Nb: less than 0.5 mass% (including 0 mass%).

The Ni-based alloy flux cored wire may further include, per the total mass of the wire: at least one selected from the group consisting of metal Ti, metal Al, and metal Mg: 0.01 mass% to 1.0 mass% in total, and a C content may be limited to 0.05 mass% or less (including 0 mass%).

The Ni-based alloy flux cored wire may further include, per the total mass of the wire: Si: 0.1 mass% to 1.5 mass%; Al₂O₃: 1.0 mass% or less (including 0 mass%); ZrO₂: 0.5 mass% to 3.0 mass%; and at least one selected from the group consisting of Na, K, and Li: 0.1 mass% to 1.0 mass% in total.

The Ni-based alloy flux cored wire may further include, per the total mass of the wire: W: 1.0 mass% to 5.0 mass%; and Mn: 1.5 mass% to 5.5 mass%.

The Ni-based alloy flux cored wire may further include, per the total mass of the wire: B: 0.10 mass% or less (including 0 mass%), and a V content may be limited to 0.03 mass% or less (including 0 mass%), a P content may be limited to 0.010 mass% or less (including 0 mass%), and a S content may be limited to 0.010 mass% or less (including 0 mass%).

### Advantageous Effects of Invention

According to the present invention, it is possible to provide a Ni-based alloy flux cored wire giving excellent weldability, and excellent porosity resistance even when the horizontal welding is performed.

### Brief Description of Drawings

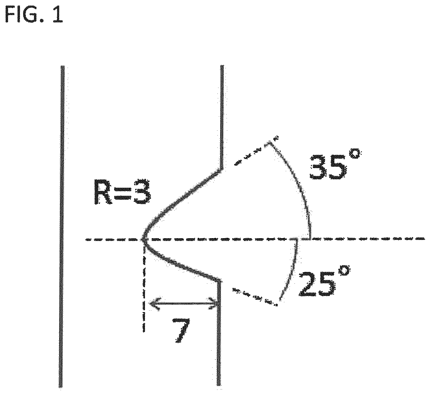

FIG. 1 is a schematic explanatory diagram showing a shape of a test plate.

### Description of Embodiments

Embodiments for carrying out the present invention are described in detail below. The present invention is not limited to the embodiments described below, and can be arbitrarily changed and carried out in a scope without departing from the gist of the present invention.

The Ni-based alloy flux cored wire of the present embodiment (hereinafter also simply mentioned as "flux cored wire" or "wire") is a flux cored wire in which an outer sheath made of a Ni-based alloy is filled with a flux. In detail, the wire of the present embodiment includes a tubular outer sheath and a flux with which the inside of the outer sheath is filled.

The wire of the present embodiment may be in any form of a seamless type wire having no seam on the outer sheath and a seam type wire having a seam on the outer sheath such as a wire having a C-shaped cross section and a wire having an overlapping cross section. Composition of the Ni-based alloy forming the outer sheath of the wire is not particularly limited, but it is preferable to form an outer sheath by, for example, a Hastelloy C276 alloy. A diameter of the wire is not particularly limited, and is preferably 0.9 mm to 1.6 mm. A flux rate of the wire (a percentage of mass of the flux to the total mass of the wire) is not particularly limited, and is preferably 15 mass% to 30 mass%.

Next, the composition of the wire of the present embodiment is described. Each component contained in the wire of the present embodiment may be contained in any of the outer sheath and the flux. Unless otherwise specified in the following description, a content of each component in the wire is a percentage of mass (mass%) of the component to the total mass of the wire.

### <TiO₂: 3 mass% to 11 mass%>

TiO₂ is a component that forms uniform slag having good covering properties, and is added to the wire of the present embodiment as a main component of a slag forming agent. When a content of TiO₂ in the wire of the present embodiment is less than 3 mass%, the covering properties of the slag deteriorate. On the other hand, when the content of TiO₂ is more than 11 mass%, a generation amount of slag is excess, and slag inclusion is liable to occur in a welded portion. Therefore, the content of TiO₂ in the wire of the present embodiment is 3 mass% to 11 mass%.

The content of TiO₂ in the wire of the present embodiment is preferably 4 mass% or more, more preferably 5 mass% or more, and preferably 10 mass% or less, and more preferably 9 mass% or less.

Examples of a TiO₂ source in the wire of the present embodiment include rutile, white titanium, potassium titanate, sodium titanate, and calcium titanate.

Here, in the present embodiment, a TiO₂ conversion value of a Ti oxide in the wire is defined as the TiO₂ content described above.

### <Ca: 0.01 mass% to 2.0 mass%>

Ca is a component that lowers a melting point of slag.

During horizontal welding, bubbles generated in the molten metal move upward in the molten metal and reach an interface between the molten metal and a base metal, then move along the interface in the molten metal and reach the interface between the molten metal and molten slag, and thereafter move in the molten slag and are discharged to the outside. Alternatively, the bubbles reach the interface between the molten metal and the molten slag directly without reaching the interface between the molten metal and the base metal, and thereafter move in the molten slag and are discharged to the outside. Therefore, when the slag is rapidly solidified, the bubbles reaching the interface between the molten metal and the slag are prevented from discharging to the outside, and as a result, porosity occurs. Therefore, the present inventors have found that, in order to improve porosity resistance, it is effective to increase time until the slag solidification by lowering a melting point of the slag, and in order to achieve this, it is effective to contain Ca in the wire.

When the content of Ca in the wire of the present embodiment is less than 0.01 mass%, an effect of improving the porosity resistance cannot be obtained. On the other hand, when the content of Ca is more than 2.0 mass%, deterioration of a bead shape and increase in a spatter generation may occur. Therefore, the content of Ca in the wire is 0.01 mass% to 2.0 mass%.

The content of Ca in the wire of the present embodiment is preferably 0.1 mass% or more, and more preferably 0.3 mass% or more. The content of Ca in the wire is preferably 1.5 mass% or less, and more preferably 1.0 mass% or less.

Examples of a Ca source include CaO, CaCO₃, and CaF₂, and CaO is used in the present embodiment. Here, in the present embodiment, the content of Ca means a total content of all Ca contained in the wire, and is a total content of Ca contained in a single metal of Ca, a Ca alloy, and a Ca compound.

### <F: 1.0 mass% or less>

F is a component that reduces a hydrogen partial pressure in an arc and prevents penetration of hydrogen into a weld metal, and may be added to the wire of the present embodiment, but when it is excessively added, the porosity may increase. Therefore, when F is contained in the wire of the present embodiment, a content thereof is 1.0 mass% or less, preferably 0.5 mass% or less, and more preferably 0.3 mass% or less.

From the standpoint of preventing the porosity, the wire of the present embodiment may not contain F, and therefore the lower limit of the content of F in the wire of the present embodiment is not particularly limited. That is, the content of F in the wire of the present embodiment may be 0 mass%, or for example, 0.05 mass% or more, or 0.1 mass% or more.

Examples of a F source in the wire of the present embodiment include NaF, K₂SiF₆, and CaF₂. Here, the total of the content of F contained in various fluorides contained in the wire, that is, a F conversion value of an amount of the fluorides in the wire is defined as the content of F.

### <Metal Ti + Metal Mg + Metal Al: 0.01 mass% to 1.0 mass%>

Ti, Mg, and Al in a metal state (hereinafter also mentioned as "metal Ti", "metal Mg", and "metal Al" respectively) are deoxidized components, and have functions of reducing an amount of dissolved oxygen in the weld metal, preventing generation of CO gas due to a reaction of C and O in the molten metal, and reducing the occurrence of the porosity. Therefore, the wire of the present embodiment may contain at least one selected from the group consisting of metal Ti, metal Mg, and metal Al. On the other hand, when contents of these components in the wire of the present embodiment are excess, hot cracking resistance may deteriorate, and the spatter generation may increase.

Therefore, in the wire of the present embodiment, a total of contents of metal Ti, metal Mg, and metal Al (hereinafter also mentioned as "metal Ti + metal Mg + metal Al") is preferably 0.01 mass% or more, more preferably 0.03 mass% or more, and still more preferably 0.05 mass% or more, and preferably 1.0 mass% or less, more preferably 0.7 mass% or less, and still more preferably 0.3 mass% or less.

Examples of a metal Ti source, a metal Mg source, and a metal Al source in the wire of the present embodiment include a Ni-based alloy that forms the outer sheath, single metal of each of Ti, Mg, and Al, a Fe-Ti alloy, a Fe-Al alloy, and a Ni-Mg alloy that may be contained in the flux, and the like.

In the present embodiment, a total value of a content of Ti contained in the metal state in the wire, that is, Ti that dissolves in sulfuric acid, is defined as the content of metal Ti. That is, a content of Ti derived from an oxide that does not dissolve in sulfuric acid is not included in the definition of the content of metal Ti. The same applies to the contents of metal Mg and metal Al.

### <C: 0.05 mass% or less>

C is contained as an inevitable impurity in the wire of the present embodiment. In order to prevent generation of CO gas due to a reaction of C and O in the molten metal and to reduce the occurrence of the porosity, the content of C in the wire of the present embodiment is preferably limited to 0.05 mass% or less.

### <Si: 0.1 mass% to 1.5 mass%>

Si is a component that increases viscosity of the slag and is an effective component for obtaining a good bead shape, and thus may be contained in the wire of the present embodiment, but when Si is contained excessively, slag removability may decrease.

Therefore, in the wire of the present embodiment, a content of Si is preferably 0.1 mass% or more, more preferably 0.2 mass% or more, and still more preferably 0.3 mass% or more, and preferably 1.5 mass% or less, more preferably 1.2 mass% or less, and still more preferably 1.0 mass% or less.

Examples of a Si source in the wire of the present embodiment include a Si oxide such as silica sand, potassium feldspar, wollastonite, sodium silicate, and potassium silicate, single metal of Si, and a Si alloy such as Fe-Si that may be contained in the flux. In the present embodiment, a total of a content of Si contained in various forms as described above in the wire is defined as the content of Si.

### <ZrO₂: 0.5 mass% to 3.0 mass%>

Although ZrO₂ is a component that improves arc force and improves arc stability even in a low welding current region and may be contained in the wire of the present embodiment, slag removability may decrease when ZrO₂ is contained excessively, and a melting point of the slag may increase and the porosity resistance may decrease.

Therefore, in the wire of the present embodiment, a content of ZrO₂ is preferably 0.5 mass% or more, more preferably 0.7 mass% or more, and still more preferably 1.0 mass% or more, and preferably 3.0 mass% or less, more preferably 2.7 mass% or less, and still more preferably 2.5 mass% or less.

Examples of a ZrO₂ source in the wire of the present embodiment include zircon sand and zirconia. Here, in the present embodiment, a ZrO₂ conversion value of a Zr oxide in the wire is defined as the content of ZrO₂ described above.

<Na + K + Li: 0.1 mass% to 1.0 mass%>

Na, K, and Li are components that improve the arc stability, and the wire of the present embodiment may contain at least one selected from the group consisting of Na, K, and Li, but when contents of these components are excess, the spatter generation may increase.

Therefore, in the wire of the present embodiment, a total of the contents of Na, K, and Li (hereinafter also mentioned as "Na + K + Li") is preferably 0.1 mass% or more, more preferably 0.2 mass% or more, and still more preferably 0.3 mass% or more, and preferably 1.0 mass% or less, more preferably 0.8 mass% or less, and still more preferably 0.6 mass% or less.

Examples of a Na source, a K source, and a Li source in the wire of the present embodiment include LiF, NaF, KF, Na₃AlF₆, K₂SiF₆, K₂TiF₆, albite, and potassium feldspar. In the present embodiment, the total of the content of Na contained in various Na compounds contained in the wire, that is, a Na conversion value of an amount of the Na compounds in the wire is defined as the content of Na. The same applies to the content of K and the content of Li.

### <Al₂O₃: 1.0 mass% or less>

Al₂O₃ is a component that increases viscosity of the slag and is an effective component for obtaining a good bead shape, and thus may be contained in the wire of the present embodiment, but when Al₂O₃ is contained excessively, slag removability may decrease.

Therefore, in the wire of the present embodiment, a content of Al₂O₃ is preferably 1.0 mass% or less, more preferably 0.8 mass% or less, and still more preferably 0.6 mass% or less.

The wire of the present embodiment may not contain Al₂O₃, and therefore, the lower limit of the content of Al₂O₃ in the wire of the present embodiment is not particularly limited. That is, the content of Al₂O₃ in the wire of the present embodiment may be 0 mass%, or for example, 0.1 mass% or more, or 0.2 mass% or more.

Examples of an Al₂O₃ source in the wire of the present embodiment include alumina and mica. Here, in the present embodiment, an Al₂O₃ conversion value of an Al oxide in the wire is defined as the content of Al₂O₃.

### <Ni: 45 mass% to 75 mass%>

Ni forms an alloy with various kinds of metals to impart excellent mechanical performance and corrosion resistance to the weld metal. When the Ni content in the wire of the present embodiment is less than 45 mass%, a stable austenitic structure is not formed when the weld metal is diluted. On the other hand, when the Ni content is more than 75 mass%, an addition amount of other alloy elements is insufficient, and the mechanical performance cannot be ensured. Therefore, the content of Ni in the wire of the present embodiment is 45 mass% to 75 mass%.

The content of Ni in the wire of the present embodiment is preferably 47 mass% or more, more preferably 50 mass% or more, and preferably 70 mass% or less, and more preferably 65 mass% or less.

Examples of a Ni source in the wire of the present embodiment include a Ni-based alloy that forms the outer sheath, metal Ni and a Ni-Mo alloy that are contained in the flux, and the like. In the present embodiment, a total of a content of Ni contained in various forms as described above in the wire is defined as the content of Ni.

### <Mo: 10 mass% to 20 mass%>

Mo has an effect of improving corrosion resistance and strength of the weld metal, but when a content thereof is more than 20 mass%, the hot cracking resistance decreases. Therefore, the content of Mo in the wire of the present embodiment is 10 mass% to 20 mass%.

The content of Mo in the wire of the present embodiment is preferably 11 mass% or more, more preferably 12 mass% or more, and preferably 19 mass% or less, and more preferably 18 mass% or less.

Examples of a Mo source in the wire of the present embodiment include a Ni-based alloy that forms the outer sheath, metal Mo and a Fe-Mo alloy that are contained in the flux, and the like. In the present embodiment, a total of a content of Mo contained in various forms as described above in the wire is described as the content of Mo.

### <W: 1.0 mass% to 5.0 mass%>

W is a component that improves strength of the weld metal, but when a content thereof is excess, the hot cracking resistance may decrease.

Therefore, in the wire of the present embodiment, the content of W is preferably 1.0 mass% or more, more preferably 1.2 mass% or more, and still more preferably 1.5 mass% or more, and preferably 5.0 mass% or less, more preferably 4.5 mass% or less, and still more preferably 4.0 mass% or less.

Examples of a W source in the wire of the present embodiment include a Ni-based alloy that forms the outer sheath, single metal of W, a Fe-W alloy, and WC that are contained in the flux, and the like. In the present embodiment, a total of a content of W contained in various forms as described above in the wire is defined as the content of W.

### <Mn: 1.5 mass% to 5.5 mass%>

S forms a low melting point compound with Ni to deteriorate the hot cracking resistance, and Mn has an effect of bonding with S to make S harmless, but when a content thereof is excess, slag removability may decrease.

Therefore, in the wire of the present embodiment, the content of Mn is preferably 1.5 mass% or more, more preferably 2.0 mass% or more, and still more preferably 2.5 mass% or more, and preferably 5.5 mass% or less, more preferably 5.0 mass% or less, and still more preferably 4.5 mass% or less.

Examples of a Mn source in the wire of the present embodiment include a Ni-based alloy that forms the outer sheath, single metal of Mn, a Fe-Mn alloy, MnO₂, and MnCO₃ that are contained in the flux, and the like. In the present embodiment, a total of a content of Mn contained in various forms as described above in the wire is defined as the content of Mn.

### <Cr: 20 mass% or less>

Cr has an effect of improving corrosion resistance and strength of the weld metal, but when a content of Cr in the wire is more than 20 mass%, the hot cracking resistance decreases. Therefore, the content of Cr in the wire of the present embodiment is 20 mass% or less.

In the wire of the present embodiment, the content of Cr is preferably 1 mass% or more, more preferably 2 mass% or more, and still more preferably 3 mass% or more, and preferably 20 mass% or less, more preferably 19 mass% or less, and still more preferably 18 mass% or less.

Examples of a Cr source in the wire of the present embodiment include a Ni-based alloy that forms the outer sheath, single metal of Cr, a Fe-Cr alloy, and Cr₂O₃ that are contained in the flux, and the like. In the present embodiment, a total of a content of Cr contained in various forms as described above in the wire is defined as the content of Cr.

### <Fe: 10.0 mass% or less>

Fe is a component that improves ductility of the weld metal, but when a content of Fe in the wire is more than 10.0 mass%, the hot cracking resistance decreases. Therefore, the content of Fe in the wire of the present embodiment is 10.0 mass% or less.

In the wire of the present embodiment, the content of Fe is preferably 0.5 mass% or more, more preferably 1.0 mass% or more, and still more preferably 2.0 mass% or more, and preferably 9.0 mass% or less, more preferably 8.0 mass% or less.

Examples of a Fe source in the wire of the present embodiment include a Ni-based alloy that forms the outer sheath, single metal of Fe, a Fe-Mn alloy, a Fe-Cr alloy, a Fe-Mo alloy, and a Fe-Ti alloy that are contained in the flux, and the like. In the present embodiment, a total of a content of Fe contained in various forms as described above in the wire is defined as the content of Fe.

Here, a total content of Ni, Cr, Mo, and Fe is preferably 65% or more, more preferably 72% or more, and particularly preferably 78% or more.

### <B: 0.10 mass% or less>

B is a component segregating at grain boundary in the weld metal and has a function of preventing decrease in elongation due to segregation of hydrogen at the grain boundary, and may be contained in the wire of the present embodiment, but when B is contained excessively, the hot cracking resistance may decrease.

Therefore, in the wire of the present embodiment, the content of B is preferably 0.10 mass% or less, more preferably 0.05 mass% or less, and still more preferably 0.02 mass% or less.

From the standpoint of preventing the porosity, the wire of the present embodiment may not contain B, and therefore the lower limit of the content of B in the wire of the present embodiment is not particularly limited. That is, the content of B in the wire of the present embodiment may be 0 mass%, or for example, 0.005 mass% or more, or 0.01 mass% or more.

Examples of a B source in the wire of the present embodiment include an oxide thereof such as B₂O₃ and metal such as a Fe-B alloy. In the present description, a total of a content of B contained in various forms as described above in the wire is defined as the content of B.

### <Nb: less than 0.5 mass%>

Nb is an element that is added to improve strength of the Ni-based alloy, but when it is added excessively, the hot cracking resistance decreases. Therefore, a content of Nb in the present embodiment is reduced to less than 0.5 mass%. The content of Nb in the present embodiment is more preferably 0.10 mass% or less, and still more preferably 0.05 mass% or less.

Examples of a Nb source in the wire of the present embodiment include a Ni-based alloy that forms the outer sheath, single metal of Nb, a Fe-Nb alloy, and Nb₂O₅ that are contained in the flux, and the like. In the present embodiment, a total of a content of Nb contained in various forms as described above in the wire is defined as the content of Nb.

### <V: 0.03 mass% or less>

V is a component that is contained as an inevitable impurity in the wire of the present embodiment. When a content of V in the wire is more than 0.030 mass%, V forms a low melting point compound with Ni, so that the hot cracking resistance may decrease. Therefore, the content of V in the wire of the present embodiment is preferably limited to 0.030 mass% or less.

### <P: 0.010 mass% or less>

### <S: 0.010 mass% or less>

P and S are components that are contained as inevitable impurities in the wire of the present embodiment. When a content of P or a content of S in the wire is more than 0.010 mass%, a low melting point compound is generated from these elements with Ni in the grain boundary, so that the hot cracking resistance decreases. Therefore, each of the contents of P and the content of S in the wire of the present embodiment are preferably limited to 0.010 mass% or less.

### <Remainder>

The wire of the present embodiment may contain components other than the above components in a range where the effects of the present invention are achieved. For example, a total of 3% or less of a Fe oxide, MgO, or the like may be contained in a range that does not impair the effects of the wire of the present embodiment.

The remainder of the wire of the present embodiment contains inevitable impurities. As the inevitable impurities, N, Ta, or the like may be contained.

A method of producing the wire of the present embodiment is not particularly limited, and examples thereof include the following methods.

First, a strip of the Ni-based alloy constituting the outer sheath is prepared and is formed into a U-shaped open tube by a forming roll while feeding the strip in a longitudinal direction. Next, the open tube is filled with the flux prepared by blending various raw materials so as to obtain desired component composition, and then processed to have a circular cross section. Thereafter, the wire is drawn by cold working to obtain a flux cored wire having a desired diameter.

Annealing may be performed during the cold working. A joint of the outer sheath formed in the production process may be welded to form a seamless wire, or a seam may remain without welding the joint.

### Examples

Hereinafter, the present invention is described in more detail with reference to Examples, but the present invention is not limited thereto.

An outer sheath of a Ni-based alloy is filled with a flux prepared by appropriately blending raw materials, and was processed by drawing to have a diameter of 1.2 mm, and then, wires in Cases 1 to 7 each having entire composition of the wire as shown in Table 1 were produced.

As shown in FIG. 1, a JIS G3106 SM490A steel plate in which a groove opening 35° upward and 25° downward and having a depth of 7 mm and R of the bottom of 3 mm was formed was prepared. Four-pass welding was performed over the groove of the steel plate under the following conditions using the wire in each Case, and porosity resistance, arc stability, spatter inhibition properties, a bead shape, and slag removability were evaluated.

### (Welding conditions)

Welding position: horizontal
Current: 200 A
Voltage: 31 V
Kind of shielding gas: 100% of CO₂
Shielding gas flow rate: 25 L/min

### <Porosity resistance>

A radiographic test (JIS Z3104-1995) was performed to measure the number of porosities having a diameter of 0.5 mm or more in a range of a weld length of 250 mm, and the porosity resistance was evaluated as follows depending on the number of porosities.
A (particularly good): 0 to 5
B (good): 6 to 10
C (slightly bad): 11 to 15
D (bad): 16 or more

### <Slag removability>

Slag was removed using a hammer or an air chipper, and slag removability was evaluated based on the following criteria.
A (particularly good): The slag could be easily removed with a hammer.
B (good): The slag could be removed with a hammer.
C (slightly bad): The slag was difficult to be removed with a hammer, but could be removed with an air chipper.
D (bad): The slag was difficult to be removed even using an air chipper.

### <Arc stability, spatter inhibition properties, and bead shape>

The arc stability and spatter inhibition properties during welding and a bead appearance of the welded portion were evaluated by sensory assessment, and were rated as A when they were extremely good, rated as B when they were good, rated as C when they were slightly bad, and rated as D when they were bad.

**Table 1**

| | | Case 1 | Case 2 | Case 3 | Case 4 | Case 5 | Case 6 | Case 7 |
|---|---|---|---|---|---|---|---|---|
| Wire component [mass%] | TiO₂ | 6.7 | 6.7 | 6.7 | 6.7 | 7.3 | 6.7 | 1.6 |
| | Ca | 0.64 | 0.57 | 0.71 | 0.07 | 0.00 | 0.00 | 2.00 |
| | F | 0.1 | 0.1 | 0.1 | 0.1 | 0.1 | 0.4 | 3.3 |
| | Metal Ti | 0.04 | 0.00 | 0.00 | 0.00 | 0.04 | 0.04 | 0.67 |
| | Metal Al | 0.04 | 0.09 | 0.09 | 0.01 | 0.04 | 0.04 | 0.00 |
| | Metal Mg | 0.01 | 0.01 | 0.01 | 0.00 | 0.01 | 0.01 | 0.00 |
| | Metal Ti + Metal Mg + Metal Al | 0.10 | 0.10 | 0.10 | 0.01 | 0.10 | 0.10 | 0.67 |
| | C | 0.01 | 0.01 | 0.01 | 0.01 | 0.01 | 0.01 | 0.01 |
| | SiO₂ | 1.56 | 1.42 | 1.66 | 0.54 | 1.23 | 0.39 | 0.60 |
| | Metal Si | 0.07 | 0.07 | 0.07 | 0.08 | 0.07 | 0.08 | 0.03 |
| | Si | 0.8 | 0.7 | 0.8 | 0.3 | 0.6 | 0.3 | 0.3 |
| | Al₂O₃ | 0.1 | 0.1 | 0.1 | 0.0 | 0.1 | 0.0 | 0.0 |
| | ZrO₂ | 1.4 | 1.4 | 1.4 | 2.1 | 1.6 | 2.1 | 0.3 |
| | Na+K+Li | 0.4 | 0.4 | 0.4 | 0.2 | 0.4 | 0.6 | 0.1 |
| | Ni | 54.3 | 54.9 | 54.5 | 55.7 | 54.9 | 55.0 | 57.9 |
| | Cr | 6.5 | 6.5 | 6.5 | 6.7 | 6.6 | 6.4 | 15.7 |
| | Mo | 15.9 | 15.7 | 15.7 | 15.4 | 15.9 | 15.9 | 9.2 |
| | w | 2.2 | 2.0 | 2.0 | 2.0 | 2.2 | 2.2 | 0.0 |
| | Mn | 3.6 | 3.3 | 3.3 | 3.3 | 3.3 | 3.3 | 5.9 |
| | Fe | 5.6 | 5.8 | 5.8 | 6.1 | 5.6 | 5.7 | 0.7 |
| | Nb | 0.02 | 0.02 | 0.02 | 0.02 | 0.02 | 0.02 | 2.04 |
| | B | 0.01 | 0.01 | 0.01 | 0.01 | 0.01 | 0.00 | 0.00 |
| | V | 0.02 | 0.02 | 0.02 | 0.02 | 0.02 | 0.00 | 0.01 |
| | P | 0.004 | 0.003 | 0.004 | 0.014 | 0.004 | 0.004 | 0.001 |
| | S | 0.005 | 0.006 | 0.006 | 0.005 | 0.005 | 0.005 | 0.003 |
| Evaluation | Porosity resistance | A | A | A | B | C | D | D |
| | Arc stability | A | A | A | B | A | A | C |
| | Spatter inhibition properties | A | A | B | A | A | A | A |
| | Bead shape | A | A | A | B | A | A | C |
| | Slag removability | A | A | A | A | B | A | A |

The wires in Cases 1 to 4 were invention examples of the present embodiment, and evaluation results thereof were good.

In the wire in Case 5, since the content of Ca was lower than the lower limit of the range defined in the present invention, the porosity resistance was slightly bad.

In the wire in Case 6, since the content of Ca was lower than the lower limit of the range defined in the present invention, the porosity resistance was bad.

In the wire in Case 7, the content of TiO₂ was lower than the lower limit of the range defined in the present invention, the content of F was higher than the upper limit of the range defined in the present invention, the content of Mo was lower than the lower limit of the range defined in the present invention, and the content of Nb was higher than the upper limit of the range defined in the present invention, so that the porosity resistance was bad, and the arc stability and the bead shape were slightly bad.

This application is based on Japanese Patent Application No. 2019-081053 filed on April 22, 2019, the entire subject matters of which are incorporated herein by reference.

## Claims

1. A Ni-based alloy flux cored wire, comprising a Ni-based alloy outer sheath and a flux with which the Ni-based alloy outer sheath is filled, and comprising, per a total mass of the wire:
Ni: 45 mass% to 75 mass%;
Cr: 20 mass% or less;
Mo: 10 mass% to 20 mass%;
Fe: 10.0 mass% or less;
TiO₂: 3 mass% to 11 mass%;
Ca: 0.01 mass% to 2.0 mass%;
F: 1.0 mass% or less (including 0 mass%); and
Nb: less than 0.5 mass% (including 0 mass%).

2. The Ni-based alloy flux cored wire according to claim 1, further comprising, per the total mass of the wire:
at least one selected from the group consisting of metal Ti, metal Al, and metal Mg: 0.01 mass% to 1.0 mass% in total,
wherein a C content is limited to 0.05 mass% or less (including 0 mass%).

3. The Ni-based alloy flux cored wire according to claim 1 or 2, further comprising, per the total mass of the wire:
Si: 0.1 mass% to 1.5 mass%;
Al₂O₃: 1.0 mass% or less (including 0 mass%);
ZrO₂: 0.5 mass% to 3.0 mass%; and
at least one selected from the group consisting of Na, K, and Li: 0.1 mass% to 1.0 mass% in total.

4. The Ni-based alloy flux cored wire according to claim 1 or 2, further comprising, per the total mass of the wire:
W: 1.0 mass% to 5.0 mass%; and
Mn: 1.5 mass% to 5.5 mass%.

5. The Ni-based alloy flux cored wire according to claim 3, further comprising, per the total mass of the wire:
W: 1.0 mass% to 5.0 mass%; and
Mn: 1.5 mass% to 5.5 mass%.

6. The Ni-based alloy flux cored wire according to claim 1 or 2, further comprising, per the total mass of the wire:
B: 0.10 mass% or less (including 0 mass%),
wherein a V content is limited to 0.03 mass% or less (including 0 mass%),
a P content is limited to 0.010 mass% or less (including 0 mass%), and
a S content is limited to 0.010 mass% or less (including 0 mass%).

7. The Ni-based alloy flux cored wire according to claim 3, further comprising, per the total mass of the wire:
B: 0.10 mass% or less (including 0 mass%),
wherein a V content is limited to 0.03 mass% or less (including 0 mass%),
a P content is limited to 0.010 mass% or less (including 0 mass%), and
a S content is limited to 0.010 mass% or less (including 0 mass%).

8. The Ni-based alloy flux cored wire according to claim 4, further comprising, per the total mass of the wire:
B: 0.10 mass% or less (including 0 mass%),
wherein a V content is limited to 0.03 mass% or less (including 0 mass%),
a P content is limited to 0.010 mass% or less (including 0 mass%), and
a S content is limited to 0.010 mass% or less (including 0 mass%).

9. The Ni-based alloy flux cored wire according to claim 5, further comprising, per the total mass of the wire:
B: 0.10 mass% or less (including 0 mass%),
wherein a V content is limited to 0.03 mass% or less (including 0 mass%),
a P content is limited to 0.010 mass% or less (including 0 mass%), and
a S content is limited to 0.010 mass% or less (including 0 mass%).
